# EUROPEAN PATENT APPLICATION

(11) **EP 2 455 676 A2**
(43) Date of publication of application: **23.05.2012**
(21) Application number: 11156038.9
(22) Date of filing: 25.02.2011
(51) Int. Cl.: F24F 11/00, H02J 9/00, H03K 19/00

(54) **Air conditioning apparatus**

(30) Priority: 18.11.2010 JP 2010257458
(71) Applicant: Hitachi Appliances, Inc., Minato-ku Tokyo 105-0022 (JP)
(72) Inventor: Swapan, Biswas, Tochigi-shi, Tochigi (JP); Wakui, Toyomitsu, Tokyo 100-8220 (JP); Sugai, Takashi, Tochigi-shi, Tochigi (JP)
(74) Representative: MERH-IP Matias Erny Reichl Hoffmann

(57) **Abstract**

The present invention provides an air conditioning apparatus that is capable of reducing power consumption in the standby state. The air conditioning apparatus of the present invention comprises a switching means (105) that is controlled by an indoor machine control section (101) to be opened and closed, an outdoor machine standby state cancelling means (206) through which a first current from through the switching means (105) flows when the switching means (105) is closed, the first current flowing through the outdoor machine standby state cancelling means (206) cancelling a standby state of the outdoor machine, a switching power supply circuit (209) for driving an outdoor machine control section (201), and a switching power supply circuit on-off means for switching a alternating-current power from an alternating-current power supply (S1) on to and off from the switching power supply circuit (209) according to whether the first current is flowing through the outdoor machine standby state cancelling means (206).

## Description

### 1. Field of the Invention

The present invention relates to an air conditioning apparatus inclusive of an indoor machine and an outdoor machine.

### 2. Description of Related Art

In recent years, counter measures against earth warming have been taken all over the world. To prevent the global warming, energy saving is required of every kind of home appliances. As for the air conditioning apparatus, Japan and other countries in the world have started to take measures to reduce standby power of the air conditioning apparatus that is consumed while the air conditioning apparatus is kept in a stand-by state.

There are two different types of air conditioning apparatuses equipped with an outdoor machine separately from an indoor machine. One of the types includes an indoor machine to which electric power is supplied from an alternating-current power supply and an outdoor machine to which electric power is supplied from the indoor machine. The other type includes an outdoor machine to which electric power is supplied from an alternating-current power supply and an indoor machine to which electric power is supplied from the outdoor machine.

According to JP2000-111123A, the air conditioning apparatus inclusive of an outdoor machine to which electric power is supplied from an alternating-current power supply and an indoor machine to which electric power is supplied from the outdoor machine is capable of reducing the standby power consumption in the following way. That is, electric power is being supplied to the indoor machine control section from the outdoor machine through a power supply line while the air conditioning apparatus is in the standby state and current is made to flow through a coil by an indoor control section energizing a supplemental power supply in the outdoor machine through a communication line and an switching power supply circuit is energized, when the air conditioning apparatus is being started up. Accordingly the outdoor machine becomes operational from the standby state.

However, it is necessary for the air conditioning apparatus of JP2000-111123A to keep the supplemental power supply energized and the current flowing through the coil while the air conditioning apparatus is operational. Therefore, additional electric power for keeping the supplemental power supply energized during the operation time of the air conditioning apparatus is needed to operate the air conditioning apparatus and the total power consumption becomes larger.

Secondly, an inrush current flows through a switching device and an inrush current prevent resistor in the air conditioning apparatus of JP2000-111123A every time the switching power supply circuit is energized from the standby state. Accordingly there may arise a problem with short lives of the switching device and the inrush current prevention device.

Thirdly, the air conditioning apparatus of JP2000-111123A has a structure in which the switching device is disposed on a power supply line connected with the switching power supply circuit to energize the outdoor machine control section. Therefore, there is a problem that noise is easily generated due everytime the alternating-current power supply is shut off from the switching power supply circuit to get the outdoor machine into the standby state.

Lastly, the air conditioning apparatus of JP2000-111123A needs to have a supplemental power supply to rectify a start-up electric power supplied from the indoor machine and it is difficult to find a space on the currently used control board of the outdoor machine to mount this supplemental power supply circuit. If this supplemental power supply circuit is mounted on the control board of the outdoor machine, a housing for electric components in the outdoor machine has to be made larger, this results in an increase in the production cost of an air conditioning apparatus.

Taking the above mentioned into account, the present invention is intended to provide an air conditioning apparatus capable of reducing the stand-by energy consumed by the air conditioning apparatus.

### SUMMARY OF THE INVENTION

To achieve the objective of the present invention above mentioned, an air conditioning apparatus the present invention has a feature described as follows.

The air conditioning apparatus of the present invention comprises a switching means that is controlled by an indoor machine control section to be opened and closed, an outdoor machine standby state cancelling means through which a first current from through the switching means flows when the switching means is closed, the first current flowing through the outdoor machine standby state cancelling means cancelling a standby state of the outdoor machine, a switching power supply circuit for driving an outdoor machine control section, and a switching power supply circuit on-off means for switching the alternating-current power from the alternating-current power supply on to and off from the switching power supply circuit according to whether the first current is flowing through the outdoor machine standby state cancelling means.

The air conditioning apparatus having this feature is capable of reducing the stand-by energy consumed by the air conditioning apparatus.

### BRIEF DESCRIPTION OF THE DRAWINGS

Fig. 1 is a schematic block diagram indicating the substantial part of the circuit for the air conditioning apparatus of an embodiment of the present invention.
Fig. 2 is a schematic circuit diagram for the air conditioning apparatus of an embodiment of the present invention.
Figs.3A and 3B are schematic circuit diagrams for the air conditioning apparatus of an embodiment of the present invention, which indicates a current flowing through a switching power supply circuit and a switching power supply circuit on-off device. Fig.3A indicates the current flowing when the air conditioning apparatus is in a stand-by state while Fig.3B indicates the current flowing when the air conditioning apparatus is in an operational state.
Fig. 4 is a schematic circuit diagram for the air conditioning apparatus of an embodiment of the present invention, which indicates a current flowing through a circuit in the air conditioning apparatus in a stand-by state.
Fig. 5 is a schematic circuit diagram for the air conditioning apparatus of an embodiment of the present invention, which indicates a current flowing through a circuit in the air conditioning apparatus when a current is made to be flowing through an outdoor machine stand-by state cancelling circuit.
Fig. 6 is a schematic circuit diagram for the air conditioning apparatus of an embodiment of the present invention, which indicates a current flowing through a circuit in the air conditioning apparatus when a current is made to be flowing through operation maintaining device.

### DETAILED DESCRIPTION OF THE EMBODIMENTS

Referring now to appropriate ones of the drawings briefly described where necessary, a detailed description will be given on embodiments of the air conditioning apparatus according to the present invention. An identical sign is attached to an identical part or portion appearing in a plurality of the drawings.

### < Brief Outline of the Circuit in the Air Conditioning Apparatus >

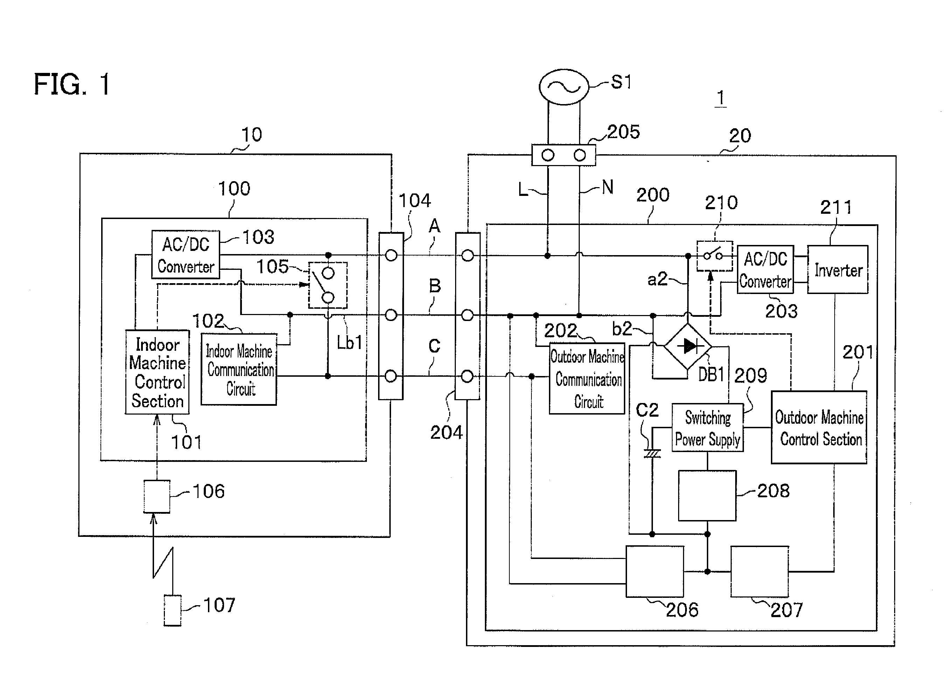

Fig. 1 is a schematic block diagram indicating the substantial part of the circuit for the air conditioning apparatus of an embodiment of the present invention. An air conditioning apparatus 1 includes an indoor machine 10 and an outdoor machine 20, which are connected through a supply cable constituted by a power supply line A, a power supply line B and a communication line C. The indoor machine 10 and the outdoor machine 20 have respectively an indoor machine control board 100 and an outdoor machine control board 200. The circuit mounted on the indoor machine control board 100 is connected with the circuit mounted on the outdoor machine control board 200 through the power supply line A, the power supply line B and the communication line C each of which runs through a terminal block 104 on the indoor machine 10 and a terminal block 204 on the outdoor machine 20. In the air conditioning apparatus 1, an alternating-current ( AC ) power from an external alternating-current power supply S1 is supplied to the outdoor machine 20 through a terminal block 205 and to the indoor machine 10 from the outdoor machine 20 through the power supply line A and the power supply line B.

In the indoor machine 10 are installed a fan motor ( not indicated ) with which an indoor fan ( not indicated ) is connected, an actuator to move flaps ( not indicated ) to be directed in a desired direction, the flaps attached at an air outlet of the indoor machine 10, an indoor heat exchanger ( not indicated ), temperature sensors ( not indicated) to measure an indoor temperature and the like and an electric component box ( not indicated ). An explanation is skipped on these parts.

The indoor machine 10 has the indoor machine control board 100 disposed in the electric component box. On this indoor machine control board 100 are mounted circuits ( not indicated ) to control each the parts above mentioned.

On the indoor machine control board 100 are mounted an indoor machine control section 101, an indoor machine communication circuit 102, an AC/DC converter 103 and a switching device 105. The indoor machine control section 101 controls the entire operation of the indoor machine 10. The indoor machine communication circuit 102 is a circuit to communicate with the outdoor machine 20 through the power supply line B and the communication line C. Then it follows that the indoor machine control section 101 is capable of communicating with an outdoor machine control section 201 through the indoor machine communication circuit 102, the power supply line B, the communication line C and an outdoor machine communication circuit 202. The AC/DC converter 103 converts the AC power supplied from the external AC power supply S1 through the power supply lines A, B to a direct-current ( DC ) power.

The indoor machine control section 101 controls each of the actuators ( not indicated ) while monitoring a detected signal from each of the sensors when the air conditioning apparatus 1 is in operation. The indoor machine control section 101 operates on the DC power supplied from the AC/DC converter 103.

A switching device 105 is mounted on a line connected from the power supply line A to the communication line C on the indoor machine control board 100. The indoor machine control section 101 controls the switching device 105 and switch on and off the switching device 105, for instance, by making a current flow through a coil ( not indicated ).

The indoor machine 10 includes an remote controller signal receiving section 106 that receives an infrared signal sent from an external remote controller 107 when the external remote controller 107 is operated by a user ( not indicated ). The indoor machine control section 101 is capable of receiving the signal from the external remote controller 107 through the remote controller signal receiving section 106.

In the outdoor machine 20 are installed a blower fan ( not indicated ) consisting mainly of a fan motor ( not indicated ) and a fan ( not indicated ), an outdoor heat exchanger ( not indicated ), a refrigerant compressor ( not indicated ), refrigerant pipes ( not indicated ) and an electric component box ( not indicated ). The explanation on each of these parts is skipped.

The outdoor machine 20 has an outdoor machine control board 200 installed in the electric component box. On the outdoor machine control board 200 is mounted a circuit to control each of the parts ( not indicated ) in the outdoor machine. The outdoor machine control board 200 is installed in an electric part box ( not indicated ) in the outdoor machine.

On the outdoor machine control board 200 is mounted an outdoor machine control section 201, an outdoor machine communication circuit 202, an AC/DC converter 203, a rectifier DB1, condenser C2, an outdoor machine standby state cancelling circuit 206, an operation maintaining device 207, a switching power supply circuit on-off device 208, a switching power supply circuit 209, a switching device 210 and an inverter 211.

The outdoor machine control section 201 controls the entire operation of the outdoor machine 20. The outdoor machine communication circuit 202 is a circuit to communicate with the indoor machine 10 through the power supply line B and the communication line C. Then it follows that the outdoor machine control section 201 is capable of communicating with the indoor machine control section 101 through the outdoor machine communication circuit 202, the power supply line B, the communication line C and the indoor machine communication circuit 102. The AC/DC converter 203 converts the AC power supplied from the external AC power supply S1 through the power supply lines L, N to a direct-current ( DC ) power. The rectifier DB1 full-wave-rectifies the AC voltage supplied from the external AC power supply S1 through lines a2, b2 and supplies the rectified voltage to the switching power supply circuit 209. This rectified voltage with the rectifier DB1 is smoothed through the condenser C2.

A current flows through the outdoor machine standby state cancelling circuit 206 if the switching device 105 mounted on the indoor machine control board 100 is on. The switching power supply circuit is switched on through the switching power supply circuit on-off device 208 mounted on the outdoor machine control board 200 when a current starts to flow through the outdoor machine standby state cancelling circuit 206. The details on the outdoor machine standby state cancelling circuit 206 is to be described below.

The switching power supply circuit on-off device 208 is connected with the outdoor machine standby state cancelling circuit 206 and switch on and off the switching power supply circuit 209 whenever a current starts or stops flowing through the outdoor machine standby state cancelling circuit 206. Specifically, the switching power supply circuit on-off device 208 keeps the switching power supply circuit 209 on while a current is flowing through the outdoor machine standby state cancelling circuit 206, and keeps the switching power supply circuit 209 off while a current is not flowing through the outdoor machine standby state cancelling circuit 206. The operation of the switching power supply circuit on-off device 208 is explained in detail below.

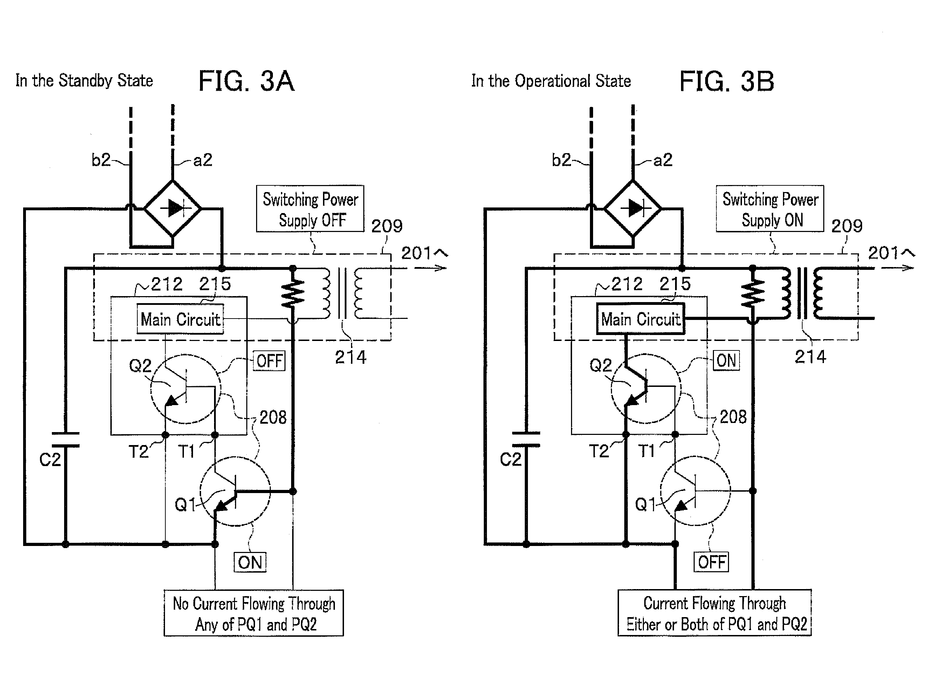

In this embodiment of the present invention, the switching power supply circuit on-off device 208 consists of a transistor Q1 ( Refer to Fig.3 ) and a transistor Q2 ( Refer to Fig.3 ) mounted in a switching power supply IC 212 ( Refer to Fig.3 ).

The switching power supply circuit 209 converts the rectified voltage supplied from the external AC power supply S1 through the rectifier DB1 to a predetermined voltage and drive the outdoor machine control section 201 to be operational if the transistor Q1 is off and the transistor Q2 is on. The operation maintaining device 207 is controlled by the outdoor machine control section 201. Once the switching power supply circuit 209 is switched on to have the outdoor machine control section 201 become operational, the operation maintaining device 207 maintains the switching power supply circuit 209 on to have the outdoor machine control section 201 continue to be operational. The operation maintaining device 207 is explained in detail below.

The inverter 211 converts the DC power converted by the AC/DC converter 203 to an AC power that is fit for each of the loads to be driven. For instance, the inverter 211 is connected with such actuator devices as the blower fan ( Not indicated ) and the refrigerant compressor ( Not indicated ) and generates an AC power supply that is fit for each actuator device to operate appropriately.

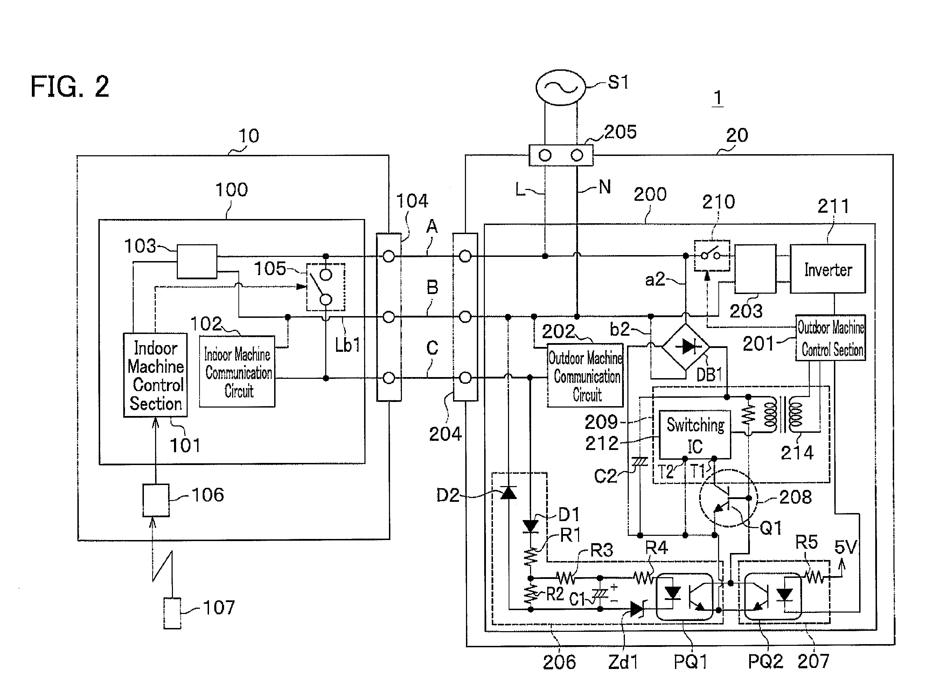

The switching device 210 is connected in series with the power supply line A as seen in Fig.2. On the switching device 210 becoming on, the AC power supplied from the external AC power supply S1 is converted by the AC/DC converter 203 to the DC power, the DC power is converted by the inverter 211 to the appropriate AC power fit for each of the actuators ( Not indicated ) and each actuator is driven to be operational. The on-off operation of the switching device 210 is controlled, for instance, by making a current flow through a coil ( Not indicated ) installed in the switching device 210 on the request of the outdoor machine control section 201.

### < Explanation on Circuits Mounted on Outdoor Machine Control Board >

Next, the circuits mounted on the outdoor machine control board 200 is explained, looking to Fig. 2, Fig.3A and Fig.3B. Fig.2 is a schematic circuit diagram for the air conditioning apparatus of an embodiment of the present invention. The circuit mounted on the indoor machine control board 100 that is indicated in Fig.2 is the same as that indicated in Fig.1 and is not explained further.

### < On the Outdoor Machine Standby State Cancelling Circuit 206 >

The outdoor machine standby state cancelling circuit 206 is connected with the power supply line B and the communication line C. The AC voltage supplied from the external AC power supply S1 is rectified with diodes D1, D2. The rectified voltage with the diodes D1 and D2 is smoothed with a condenser C1. Resistors R1, R2 are mounted to adjust a voltage applied to a photo-coupler PQ1. Resistors R3, R4 are mounted to adjust a current flowing through the photo-coupler PQ1. A zener-diode Zd1 is mounted to generate a constant voltage and stabilize the voltage applied to the photo-coupler PQ1.

The photo-coupler PQ1 has a function of converting an electrical signal to light and transmitting a signal by making a light receiving element conductive with the light and a current flow through the light receiving element. Both a light emitting element ( Not indicated ) and the light receiving element ( Not indicated ) are installed inside the photo-coupler PQ1 and the photo-coupler PQ1 has a structure encapsulated in a package to shut off light coming inside.

Accordingly when the AC power is supplied to the outdoor machine standby state cancelling circuit 206, the light emitting element in the photo-coupler PQ1 emits light on a rectified and smoothed voltage with the diodes D1, D2 and a condenser C1. When the light emitted by the light emitting element of the photo-coupler PQ1 is received by the light receiving element of the photo-coupler PQ1, a current flows through the light receiving element of the photo-coupler PQ1.

### < On Switching Power Supply Circuit On-Off Device 208 >

Fig.3A and 3B are schematic circuit diagrams for the air conditioning apparatus of an embodiment of the present invention, which indicates a current flowing through a switching power supply circuit and a switching power supply circuit on-off device. Fig.3A indicates the current flowing when the air conditioning apparatus is in a stand-by state while Fig.3B indicates the current when the air conditioning apparatus is in an operational state.

A npn-type transistor Q1 and another npn-type transistor Q2 mounted in an switching IC 212 constitute the switching power supply circuit on-off device 208. The base and the emitter of the transistor Q1 are connected with the photocouplers PQ1, PQ2 ( See Fig.2 ). The collector of the transistor Q1 is connected with the base of the transistor Q2 through a terminal T1 of the switching IC 212. The collector of the transistor Q2 is connected with a main circuit 215 of the switching IC 212 and the emitter of the transistor Q2 is connected with the photocouplers PQ1, PQ2 through the terminal T2. It is also possible to apply a couple of pnp-type transistors to the transistors Q1, Q2 instead of the npn-type ones if they are mounted with their poling directions appropriately set.

When the air conditioning apparatus 1 is in the standby state, no current is flowing through any of the photocouplers PQ1, PQ2 and a current supplied from through the rectifier DB1 is flowing through the base of the transistor Q1 to the emitter of the transistor Q1 to have the transistor become on ( See Fig.3A ). On the other hand, when the air conditioning apparatus 1 is kept in the operational state, a current is flowing through either or both of the photocouplers PQ1, PQ2 and the transistor Q1 becomes off with its base voltage being 0V ( See Fig.3B ).

### < On Switching Power Supply Circuit 209 >

Next, an explanation is given on the switching power supply circuit 209 mounted on the outdoor machine control board 200. The switching IC 212 and a transformer 214 connected with the switching IC 212 constitute the switching power supply circuit 209.

The circuit included in the switching IC 212 is designed to perform the following operation. That is, if the transistor Q1 is kept on, the transistor Q2 in the switching IC 212 is kept off and no current is flowing through the switching IC 212. Alternatively, if the transistor Q1 is kept off, the transistor Q2 in the switching IC 212 is kept on and a current is flowing through the switching IC 212.

More specifically, if the transistor Q1 is kept on with a current flowing through the transistor Q1 from its base to its emitter when the air conditioning apparatus 1 is in the standby state, the base voltage of the transistor Q2 is 0 V and the switching power supply circuit 209 is kept off with no current flowing through the switching IC 212 ( See Fig.3A ).

On the other hand, if the transistor Q1 is kept off with the base voltage of the transistor Q1 being 0 V, the base voltage of the transistor Q2 in the switching IC 212 is sufficiently high to have a current flowing through the switching IC 212 and the terminal T2 and the current is flowing through the switching power supply circuit 209 ( See Fig.3B ).

The primary side coil of the transformer 214 is connected in series with the switching IC 212 while the secondary side coil of the transformer 214 is connected with the outdoor machine control section 201 and a terminal connected with a resistor R5 of the operation maintaining device 207. That is, the terminal voltage ( 5 V ) connected with the resistor R5 of the operation maintaining device 207 is supplied from the switching power supply circuit 209.

### < On Operation Maintaining Device 207 >

The photocoupler PQ2 and the resistor R5 constitute the operation maintaining device 207. The resistor R5 is used to adjust a current flowing through the photocoupler PQ2. The photocoupler PQ2 has the same structure and elements as the photocoupler PQ1, converts an input electrical signal to light and transmit a signal by making a light receiving element conductive with the received light and a current flows through the light receiving element. The photocoupler PQ2 is connected with the outdoor machine control section 201. It should be noted that a constant voltage of, for example, 5 V supplied from the switching power supply circuit 209 is applied to the photocoupler PQ2.

### < Individual Operations of Air Conditioning Apparatus >

### « 1. Standby State »

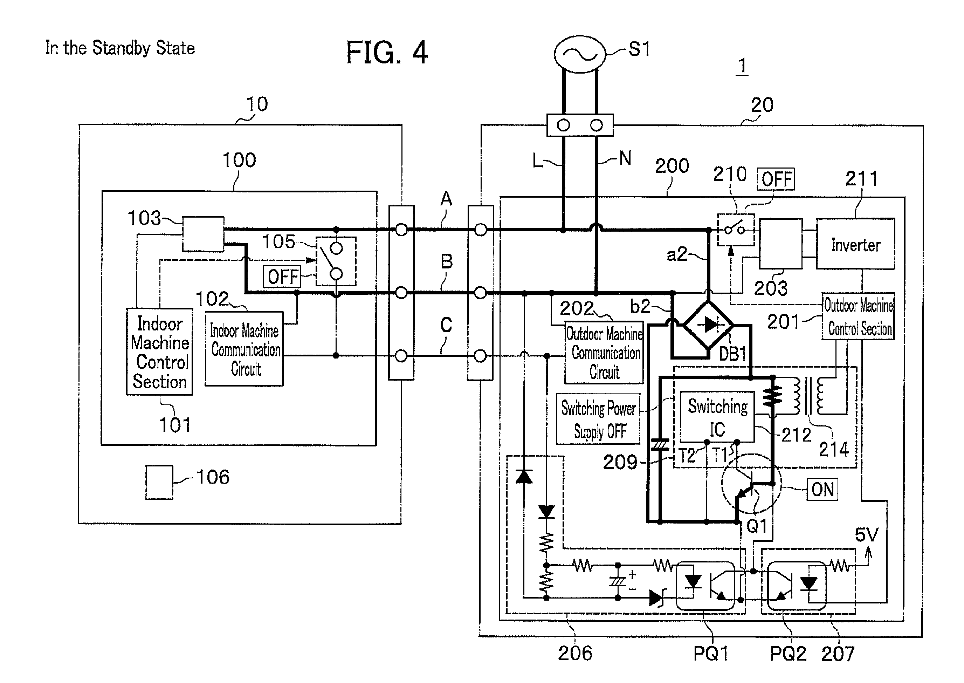

Next, the individual operations of the air conditioning apparatus are explained in sequence. Fig. 4 is a schematic circuit diagram for the air conditioning apparatus of an embodiment of the present invention, which indicates a current flowing through a circuit in the air conditioning apparatus in a stand-by state. The thick line in Fig.4 indicates the current flowing through the circuit.

Since power is supplied to the air conditioning apparatus 1 from the external AC power supply S1 even when the air conditioning apparatus 1 is in the standby state, the indoor machine control section 101 is in a state of being capable of responding to an operation signal sent from an external device through the remote controller signal receiving section 106. That is, when the indoor machine control section 101 receives the operation signal from outside, the indoor machine control section 101 switches on the switching device 105 of the indoor machine 10, which leads to having the outdoor machine 20 start up.

While the air conditioning apparatus 1 is in the standby state, the switching device 105 is kept off. Therefore no current flows through the outdoor machine standby state cancelling circuit 206. With the air conditioning apparatus 1 being in the standby state, a current supplied through the rectifier DB1 flows from the base of the transistor Q1 to the emitter of the transistor Q1 and the transistor Q1 is kept on ( See Fig.3A ). With the transistor Q1 kept on, the voltage of the terminal T1 that is connected with the collector of the transistor Q1 is 0 V and the transistor Q2 in the switching IC 212 is kept off ( See Fig.3A ). As a result, the switching IC 212 is in a nonoperational state and the outdoor machine control section 201 is in a nonoperational state as well.

That is, making use of the circuit with which oscillation of the switching power supply circuit 209 of the outdoor machine 20 is kept stopped when the air conditioning apparatus 1 is in the standby state, the switching power supply circuit 209 is made to be in the nonoperational state without shutting off power supply lines a2, b2 to the switching power supply circuit. As a result, there is no case allowed to occur, in which an inrush current flows whenever the air conditioning apparatus 1 is switched between on and off.

Moreover, because the switching power supply circuit 209 is made to be in the nonoperational state without shutting off the AC power supplied to the switching power supply circuit 209 of the outdoor machine 20, noises are prevented from being generated.

### « 2. Transition from Standby State to Operational State »

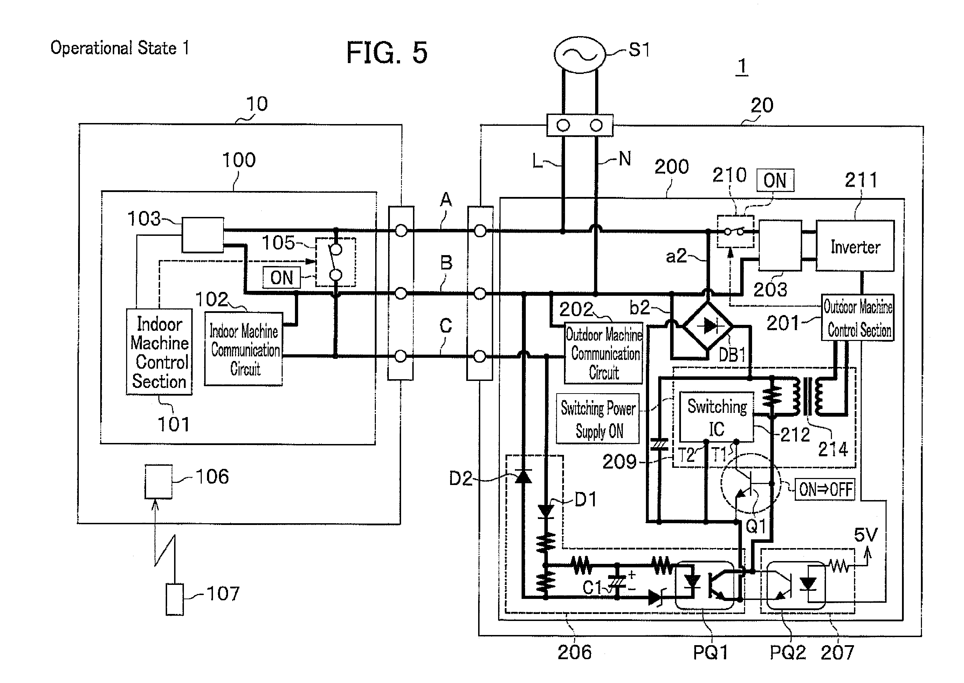

Fig. 5 is a schematic circuit diagram for the air conditioning apparatus of an embodiment of the present invention, which indicates a current flowing through a circuit in the air conditioning apparatus when a current is made to be flowing through an outdoor machine stand-by state cancelling circuit. In this Fig.5, the thick line indicates a current flowing through the circuit when the air conditioning apparatus 1 is switched from the standby state to the operational state. Now is considered a case in which an operation signal sent from the external remote controller 107 is input to the indoor machine control section 101 through the remote controller signal receiving section 106 when the air conditioning apparatus 1 is in the standby state as indicated in Fig.4. The operation signal works as a trigger signal and causes the indoor machine control section 101 to start up. In this case, the indoor machine control section 101 makes a current flow, for example, through a coil ( Not indicated ) and the switching device 105 of the indoor machine 10 become on.

Once the switching device 105 becomes on, a current flows through the circuit connecting the AC power supply S1 with the outdoor machine standby state cancelling circuit 206. The current flows from the AC power supply S1 back to the AC power supply S1 through the power supply line A, the power supply line L, the switching device 105, the communication line C, the outdoor machine standby state cancelling circuit 206, the power supply line B and the power supply line N in this order.

The outdoor machine standby state cancelling circuit 206 rectifies the input AC voltage with the diodes D1, D2, smoothes the rectified AC voltage with the condenser C1 and makes a DC current flow through the photocoupler PQ1. As a result, the light emitting element ( Not indicated ) of the photocoupler PQ1 emits light with the DC current flowing through it. Then a current flows through the light receiving element ( Not indicated ) of the photocoupler PQ1 which receives the light emitted by the light emitting element.

In this case the transistor Q1 is in the off state with its base voltage being 0 V, which makes the base voltage of the transistor Q2 in the switching IC 212 become high ( See Fig.3B ). As a result, a current flows through the switching IC 212 and the terminal T2 and the switching IC 212 oscillates and the current flows through the primary side coil of the transformer 214. The secondary side coil of the transformer 214 is connected with the outdoor machine control section 201 and the outdoor machine control section 201, to which the voltage transformed with the transformer 214 is supplied, is started up.

The switching device 210 is changed from the off state to the on state by making a current flow through a coil ( Not indicated ) after the outdoor machine control section 201 is started up. Then the AC power supplied from the AC power supply S1 is supplied to the AC/DC converter 203 and the supplied AC power is converted by the AC/DC converter 203 to the DC power, which is subsequently supplied to the inverter 211. Power from the inverter 211 is supplied to actuators ( Not indicated ) connected with the inverter 211 and the entire outdoor machine 20 sets in operation.

According to the way above mentioned, the air conditioning apparatus 1 is changed from the standby state to the operational state.

In summary, the outdoor machine standby state cancelling circuit 206 functions to cancel the standby state of the outdoor machine 20 by making a current flow through the switching device 105 that is controlled and closed by the indoor machine control section 101. Then the switching power supply circuit on-off device 208 functions to have power from the AC power supply S1 supplied to the switching power supply circuit 209 if a current is flowing through the outdoor machine standby state cancelling device 206.

### « 3. Maintaining Operational State »

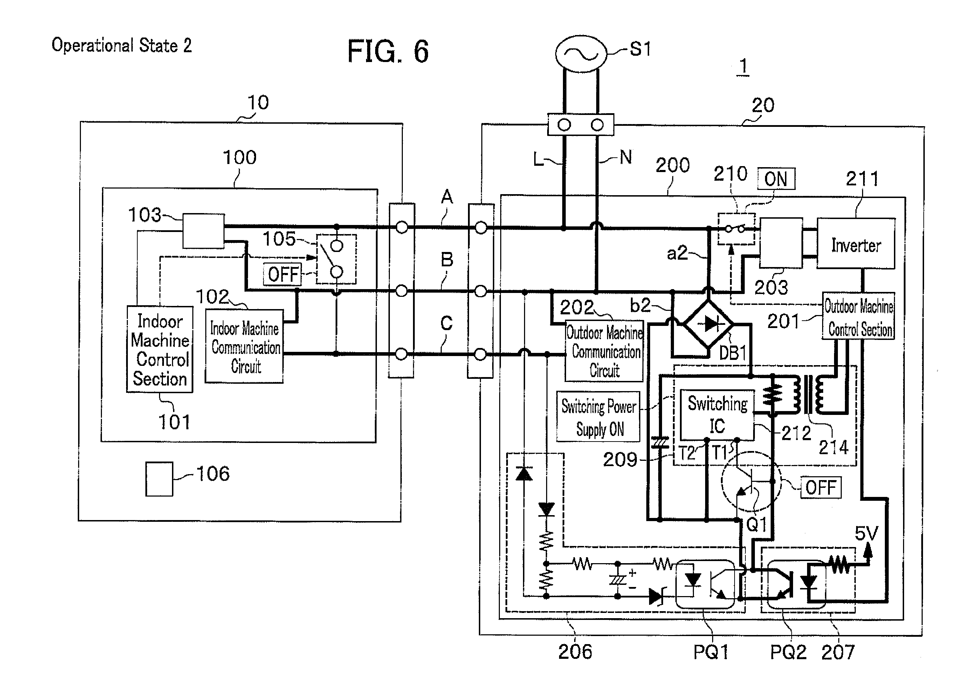

Fig. 6 is a schematic circuit diagram for the air conditioning apparatus of an embodiment of the present invention, which indicates a current flowing through a circuit in the sir conditioning apparatus when a current is made to be flowing through operation maintaining device. In Fig.6, the thick line indicates the current flowing through the circuit when a current flows through the operation maintaining device 207 after the air conditioning apparatus 1 changes from the standby state to the operational state.

The outdoor machine control section 201 lowers the voltage of an output-port of a microcomputer ( Not indicated ) mounted in the outdoor machine control section 201 ( that is, outputs L₀ ) after it is started up. Since a constant voltage such as 5 V is applied in advance to the photocoupler PQ2 through the switching power supply circuit 209, a current flows through the photocoupler PQ2 when the voltage of the output-port voltage of the microcomputer of the outdoor machine control section 201 is lowered ( for instance, to 0 V ).

When the current flows through the photocoupler PQ2, the light emitting element ( Not indicated ) of the photocoupler PQ2 emits light, which causes a current to flow through the light receiving element ( Not indicated ) of the photocoupler PQ2. As a result, the switching power supply circuit 209 is maintained in the on state. That is, the outdoor machine control section 201 keeps the switching power supply circuit 209 by making a current flow through the operation maintaining device 207 so that the operation of the outdoor machine control section 201 is maintained.

A current is flowing through the outdoor machine standby state cancelling circuit 206 with the switching device 105 of the indoor machine 10 being on, just after the microcomputer ( Not indicated ) mounted in the outdoor machine control section 201 outputs Lo.

Then, after a predetermined time elapses, the indoor machine control section 101 switches the switching device 105 of the indoor machine 10 from the on state to the off state. When the switching device 105 of the indoor machine 10 is in the off state, no current is flowing through the outdoor machine standby state cancelling circuit 206. However, the current is flowing through the operation maintaining device 207 of the outdoor machine 20 when the switching device 105 becomes off and the switching power supply circuit 209 is kept on, which enables maintaining the operation of the outdoor machine control section 201.

Thus, the operation of the outdoor machine 20 is maintained.

### « 4. Transition from Operational State to Standby State »

Next is considered a case in which a stop signal is input by, for example, the external remote controller ( Not indicated ) to the indoor machine control section 101 through the receiving section 106 of the indoor machine 10 when the air conditioning apparatus 1 is in operation. In this case, the indoor machine control section 101 stops each of the actuators ( Not indicated ) installed in the indoor machine 10 and send the stop signal from the indoor machine communication circuit 102 to the outdoor machine communication circuit 202 through the power supply line B and the communication line C.

The outdoor machine control section 201, which receives the stop signal from through the outdoor machine communication circuit 202, continues to be operational for a constant time predetermined in advance by the microcomputer ( Not indicated ) mounted in the outdoor machine control section 201 after receiving the stop signal. Then, if no operation signal is sent from the indoor machine 10 until the constant time elapses, the outdoor machine control section 201 determines that the air conditioning apparatus 1 is to be in the standby state and switches the switching device 210 from the on state to the off state. As a result, power supply to the inverter 211 of the outdoor machine 20 stops and each of the actuators ( Not indicated ) becomes off.

After switching off the switching device 210 the outdoor machine control section 201 outputs a high voltage at the output-port of the microcomputer ( Not indicated ) in the outdoor machine control section 201 ( outputs H1 ). Then no current flows through the photocoupler PQ2 that is connected with the output-port of the microcomputer ( Not indicated ) of the outdoor machine control section 201. In this case the transistor Q1 becomes in the on state with its base voltage being high. Therefore a current supplied from through the rectifier DB1 flows from the base of the transistor Q1 to the emitter of the transistor Q1.

Thus, the base voltage of the transistor Q2 mounted in the switching IC 212 ( See Fig.3A ) becomes 0 V and the switching IC 212 becomes in the off state, which leads to having the outdoor machine control section 201 in the off state.

According to the way above mentioned, the air conditioning apparatus 1 changes from the operational state into the standby state ( See Fig.4 ).

The air conditioning apparatus 1 of the present invention has the switching power supply circuit 209 of the outdoor machine 20 in the off state, maintains the switching power supply circuit 209 in the off state and has a current flow only through the circuit that is needed to respond to an external signal sent from through the remote controller receiving portion 106 ( see Fig.4 ), when the air conditioning apparatus 1 is in the standby state. Therefore the air conditioning apparatus 1, in which AC power is supplied from the outdoor machine 20, consumes less power.

Moreover, the air conditioning apparatus 1 of the present invention has the circuit that is capable of stopping oscillation of the switching power supply circuit 209 of the outdoor machine 20 without shutting off any of the power supply lines a2, b2. Therefore, an inrush current that can flow when the air conditioning apparatus 1 starts up is prevented from flowing through the circuit.

In the air conditioning apparatus 1 of the present invention, a current is made to start flowing through the switching power supply circuit 209 by a current flowing through the outdoor machine standby state cancelling circuit 206, which is controlled by switching on and off the switching device 105 mounted in the indoor machine 10. Accordingly the switching power supply circuit 209 of the outdoor machine is switched off without shutting off the AC power supplied to the switching power supply circuit and noise is prevented from being generated.

Moreover, since electrical components used for the air conditioning apparatus 1 of the present invention are relatively small sized, they are mounted in a relatively small space. Therefore it is possible to mount additional electrical components for controlling the standby state to both an indoor control board 100 and an outdoor control board 200 of a conventional air conditioning apparatus to realize the air conditioning apparatus 1 of the present invention and house the indoor control board and the outdoor control board in the same electrical component box as is currently used.

That is, the standby energy is reduced by altering or replacing control boards of an indoor machine 10 and an outdoor machine 20 used for the conventional air conditioning apparatus without changing the structure of each of electrical component boxes of the indoor machine 10 and the outdoor machine 20 and the total production cost of the air conditioning apparatus 1 does not become higher.

Furthermore, the air conditioning apparatus 1 of the present invention continues to operate after the switching device 105, which is mounted on the indoor machine control board 100, is switched off. That is, while a current flowing through a coil is maintained by a supplemental power supply in the case of the conventional air conditioning apparatus, the on state of the switching power supply circuit 209 of the air conditioning apparatus 1 is maintained with the operation maintaining device 207. In the case of the air conditioning apparatus 1 of the present invention, the microcomputer ( Not indicated ) of the outdoor machine control section 201 outputs a lower voltage to the output-port connected with the operation maintaining device 207 so that a current flows through the photo coupler of the operation maintaining device 207. As a result, the outdoor machine 20 of the air conditioning apparatus 1 consumes less power than the outdoor machine of the conventional air conditioning apparatus that uses the supplemental power supply.

## Claims

1. An air conditioning apparatus that operates on an alternating-current power supplied from an alternating-current power supply and includes an indoor machine (10) and an outdoor machine (20) which are connected with each other through a plurality of lines, the air conditioning apparatus (1) comprising,
a switching means (105) that is controlled by an indoor machine control section (101) to be opened and closed,
an outdoor machine standby state cancelling means (206) through which a first current from through the switching means (105) flows when the switching means (105) is closed, the first current flowing through the outdoor machine standby state cancelling means (206) cancelling a standby state of the outdoor machine (20),
a switching power supply circuit (209) for driving an outdoor machine control section (201), and
a switching power supply circuit on-off means (208) for switching the alternating-current power from the alternating-current power supply on to and off from the switching power supply circuit (209) according to whether the first current is flowing through the outdoor machine standby state cancelling means (206).

2. The air conditioning apparatus as described in claim 1, further comprising,
an operation maintaining means (207) controlled by the outdoor machine control section (201),
wherein the outdoor machine control section (201) maintains the switching power supply circuit on by making a second current flow through the operation maintaining means, and the indoor machine control section (101) stops the alternating-current power from the alternating-current power supply through the indoor machine (10) from being supplied to the outdoor machine (20) by opening the switching means (105) mounted in the indoor machine (10).

3. The air conditioning apparatus as described in claim 1 or 2, wherein the outdoor machine control section (201) is switched off by stopping the second current from flowing through the operation maintaining means (207) when the outdoor machine control section (201) receives a stop signal sent from outside.
